# FASCICULE DE BREVET EUROPEEN

(11) **EP 2 655 007 B1**
(45) Date de publication et mention de la délivrance du brevet: **29.06.2016**
(21) Numéro de dépôt: 11815464.0
(22) Date de dépôt: 20.12.2011
(51) Int. Cl.: B23Q 3/08, B25B 11/00

(54) **DISPOSITIF FORMANT PLOT DE BRIDAGE**
VORRICHTUNG IN FORM EINER WERKSTÜCKHALTERUNG
DEVICE FORMING A WORKPIECE CLAMP

(30) Priorité: 20.12.2010 FR 1060828
(43) Date de publication de la demande: 30.10.2013
(73) Titulaire: Thibaut, 14500 Vire (FR)
(72) Inventeur: THIBAUT, Jacques, F-14500 Vaudry (FR); THIBAUT, Christophe, F-14500 Vire (FR)
(74) Mandataire: Kaspar, Jean-Georges
(86) Numéro de dépôt international: PCT/FR2011/053087
(87) Numéro de publication internationale: WO 2012/085446

(56) Documents cités:
- WO-A1-2007/028886
- DE-A1- 19 629 685
- DE-U1- 29 518 188
- DE-U1-202009 006 437
- FR-A1- 2 546 790
- FR-A1- 2 950 556
- US-A1- 2008 277 885

## Description

L'invention est relative à un dispositif formant plot de bridage, du type comportant une première face de solidarisation par dépression à une table de travail et une deuxième face de solidarisation par dépression d'une pièce à travailler.

Un tel dispositif est connu du document WO 2007/02886 A1.

Les documents EP 1 342 533 A1 et WO 2007/028 886 A1 décrivent des machines automatiques pour travailler des matériaux en forme de plaque, dans lesquelles les matériaux à travailler sont positionnés et fixés par des plots de bridage double face. Les plots de bridage double face comportent une ventouse supérieure et une ventouse inférieure. Les ventouses supérieure et inférieure sont reliées à des tuyaux d'air et de vide. La dépression permettant de réalises la fixation d'un plot de bridage à la table de travail et la fixation de la pièce à travailler au plot de bridage est réalisée par pompage à travers des tuyaux d'aspiration latéraux, dont la présence sur la table de travail conduit à un risque d'accrochage de tuyaux d'aspiration avec l'outil d'usinage et peut entraîner un risque d'accident pour l'opérateur de la machine-outil. On tente d'éviter ces risques en plaquant les tuyaux d'aspiration sur la table d'usinage par appui de pièces ou de cales. Cependant, les tuyaux plaqués sur la table d'usinage retiennent les poussières, boues et copeaux entraînés par le fluide de lubrification d'usinage, ce qui nuit à la qualité du travail.

On a enfin imaginé de ménager une pluralité d'orifices débouchant dans la table de travail et d'utiliser les orifices au droit des ventouses pour véhiculer la dépression au travers de ces orifices. Bien que cette disposition donne satisfaction, elle ne permet pas de placer les plots de positionnement en toutes positions désirées. En outre, les orifices utilisés sont susceptibles de s'encrasser et de nuire ainsi au bon fonctionnement du plot de positionnement.

Le document DE 20 2009 006 437 U1 concerne un pied formant ventouse pour fixer de manière détachable une petite machine, en particulier un bras de mesure. Le pied formant ventouse du document DE 20 2009 006 437 U1 ne forme pas un plot de bridage double face destiné à une installation d'usinage ou de travail d'une pièce à travailler. La face supérieure du pied formant ventouse du document DE 20 2009 006 437 U1 est destinée à fixer la machine ou le bras de mesure : cette face supérieure du pied formant ventouse comporte des taraudages borgnes.

Un premier but de l'invention est de remédier aux inconvénients de l'état de la technique connue, en supprimant les tuyaux d'aspiration et de dépression de l'art antérieur.

Un deuxième but de l'invention est de permettre le placement des ventouses double face à n'importe quel endroit désiré de la table de travail.

Un troisième but de l'invention est d'éviter des risques d'accident pour l'opérateur de la machine-outil, et d'améliorer la qualité du travail lors de l'utilisation des plots de bridage.

Un quatrième but de l'invention est de faciliter le positionnement de la pièce à travailler sur le plot de bridage, en améliorant la facilité et la qualité de translation de la pièce à travailler sur les plots de bridage fixés à la table de travail.

L'invention a pour objet une dispositif formant plot de bridage, du type comportant un corps présentant une première face de solidarisation par dépression à une table de travail et une deuxième face de solidarisation par dépression d'une pièce à travailler, selon la revendication 1.

Les revendications dépendantes de la revendication 1 ont pour objet des caractéristiques alternatives avantageuses d'un dispositif selon l'invention.

Selon d'autres caractéristiques additionnelles alternatives de l'invention :
- Le dispositif peut comporter un moyen de soulèvement de la pièce à travailler, pour en faciliter la translation et le positionnement.
- Ledit moyen de soulèvement de la pièce à travailler peut comporter un vérin, de préférence un vérin à bille porteuse.
- Ledit moyen de soulèvement de la pièce à travailler peut être commandé par au moins une vanne normalement ouverte de mise en dépression, de manière à économiser l'énergie de maintien de la vanne dans une position prédéterminée.

L'invention sera mieux comprise grâce à la description qui va suivre, donnée à titre d'exemple non limitatif en référence aux dessins annexés dans lesquels :
La figure 1 représente schématiquement une vue en coupe diamétrale d'un dispositif de bridage selon l'invention.
La figure 2 représente schématiquement une vue en perspective éclatée du dispositif de bridage selon l'invention de la figure 1.
La figure 3 représente schématiquement une vue en coupe diamétrale d'un deuxième mode de réalisation de dispositif de bridage selon l'invention.
La figure 4 représente schématiquement une vue en perspective éclatée du dispositif de bridage selon l'invention de la figure 3.

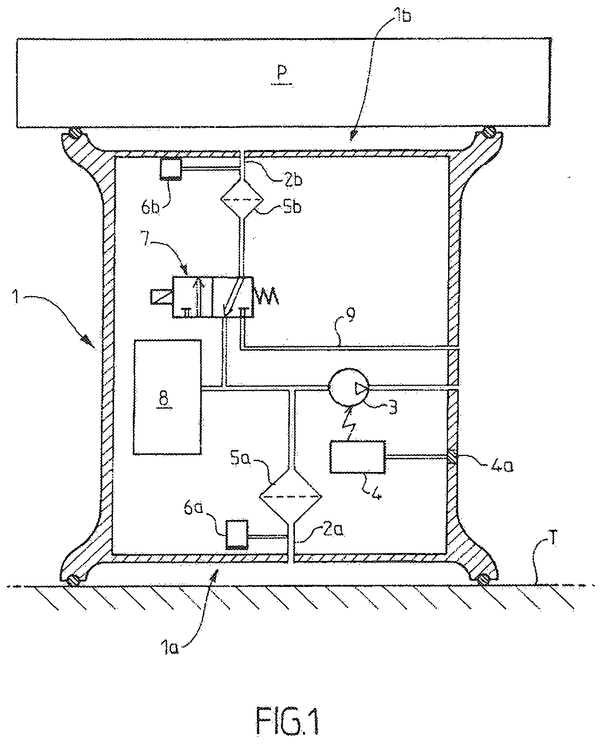

En référence aux figures 1 à 4, les éléments identiques ou fonctionnellement équivalents sont repérés par des chiffres de référence identiques.

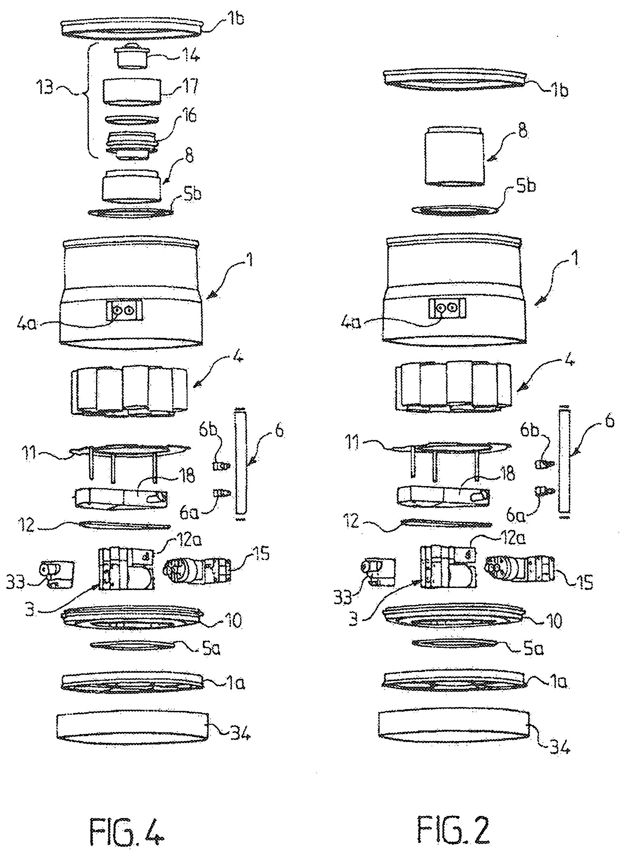

Sur les figures 1 et 2, un dispositif de bridage selon l'invention comporte un corps (1) de forme sensiblement cylindrique présentant une première face de solidarisation (1a) par dépression à une table de travail (T) représentée en traits pointillés et présentant une deuxième face de solidarisation (1b) par dépression d'une pièce (P) à travailler.

Le corps (1) contient un moyen générateur de dépression relié à ladite première face (1a) de solidarisation à la table (T) de travail et relié à ladite deuxième face (1b) de solidarisation d'une pièce (P) à travailler, par des conduits appropriés (2a, 2b), respectivement.

Le moyen générateur de dépression comporte essentiellement une pompe (3) à vide associée à une source (4) d'alimentation en énergie de ladite pompe à vide (3).

La pompe à vide (3) aspirante est apte à générer une dépression sur la première face inférieure de solidarisation par dépression à la table (T) de travail, ainsi que sur la deuxième face de solidarisation par dépression de la pièce (P) à travailler.

La pompe à vide (3) est, d'une part, avantageusement associée à un premier filtre (5a) disposé sur le conduit (2a) associé à la première face inférieure (1a) de solidarisation par dépression.

La pompe à vide (3) est, d'autre part, avantageusement associée à un deuxième filtre (5b) disposé sur le conduit (2b) associé à la deuxième face (1b) de solidarisation d'une pièce (P) à travailler.

Un premier vacuostat (6a) est avantageusement prévu pour fournir un signal représentatif de la dépression générée sur la première face (1a) de solidarisation, et un deuxième vacuostat (6b) est avantageusement prévu pour fournir un signal représentatif de la dépression générée sur la deuxième face (1b) de solidarisation.

Un vacuostat (6a) ou (6b) est un détecteur de dépression pour détecter la dépression générée sur la première face inférieure de solidarisation par dépression à la table (T) de travail, ou sur la deuxième face de solidarisation par dépression de la pièce (P) à travailler, et pour délivrer un signal électrique ou mécanique indiquant la présence d'un vide représentatif d'une valeur de force de maintien sur la première face inférieure de solidarisation par dépression à la table (T) de travail, ou sur la deuxième face de solidarisation par dépression de la pièce (P) à travailler.

Un distributeur (7) est associé à la deuxième face (1b) de solidarisation par dépression de la pièce (P) à travailler pour permettre la mise en dépression de cette deuxième face (1b) de solidarisation par dépression, ou pour permettre la mise à la pression atmosphérique de cette deuxième face (1b) de solidarisation par dépression.

Le distributeur (7) est avantageusement constitué en électrovanne normalement ouverte dans le sens de la mise en dépression de la deuxième face (1b) de sondarisation de la pièce (P) à travailler, de manière à économiser l'énergie de maintien de l'électrovanne (7) dans cette position prédéterminée de mise en dépression.

La bobine ou solénoïde de l'électrovanne (7) est également de préférence alimentée en énergie par la même source (4) d'alimentation en énergie.

Une réserve tampon (8) de vide reliée à la pompe à vide (3) est prévue pour assurer la régularité de la pompe à vide (3) et éviter des mises en marche et des arrêts répétés de manière rapprochée.

Cette réserve tampon (8) de vide permet également d'économiser l'énergie procurée par l'alimentation (4) en énergie.

Dans le mode de réalisation représenté, la source (4) d'alimentation en énergie comporte au moins une batterie électrique de préférence rechargeable par une prise (4a). L'invention couvre également tout autre mode d'alimentation en énergie de la pompe à vide (3), notamment des modes d'alimentation en énergie à distance, par exemple par transmission électromagnétique, par micro-ondes ou par tout autre moyen.

La pompe à vide (3) est avantageusement une pompe à vide électrique dans le cas d'une alimentation en énergie par batteries électriques. La pompe à vide (3) se présente dans ce cas de préférence sous forme d'un ensemble comprenant un moteur électrique et un bloc d'aspiration actionné par ledit moteur électrique.

Les batteries électriques (4) sont de préférence des accumulateurs rechargeables de type électrochimique associant un hydroxyde de nickel avec un hydrure métallique et présentant une densité d'énergie à l'état chargé comprise entre 30 et 100 wattheures par kilogramme.

La pompe à vide (3) est de préférence une pompe à vide à diaphragme excentrique présentant un débit nominal d'aspiration compris entre 1 et 5 litres par minute et apte à atteindre une dépression de l'ordre de 500 millibars par rapport à la pression atmosphérique.

Le moyen générateur de dépression peut être mis en marche manuellement à l'aide d'un moyen formant interrupteur d'arrêt et de mise en marche de l'alimentation en énergie, ou peut alternativement être commandé par un circuit électronique, comportant éventuellement un microcontrôleur, de manière à utiliser l'alimentation en énergie uniquement pour compenser les fuites de dépression susceptibles de nuire à un bridage correct de la pièce (P) à travailler par rapport à la table (T) de travail.

Dans le cas où le moyen générateur de dépression est commandé par un circuit électronique de commande, les signaux de dépression des vacuostats (6a, 6b) sont utilisés comme signaux d'entrée de commande pour une boucle de régulation ou pour un programme de fonctionnement mémorisé dans le microcontrôleur du circuit de commande.

Un procédé d'utilisation du dispositif de bridage de la figure 1 débute par une étape de positionnement du plot de bridage sur une table (T) de travail.

Le positionnement des plots de bridage sur la table (T) de travail peut être réalisé manuellement, ou de manière automatique par une machine de travail équipée d'une broche adaptée à cet effet.

Après avoir assuré le positionnement des plots de bridage, on active simultanément la pompe à vide (3) et la bobine électromagnétique ou solénoïde de l'électrovanne (7), de manière à isoler la face supérieure (1b) de solidarisation en assurant sa communication avec la pression atmosphérique et de manière à générer une dépression sur la face inférieure (1a) de solidarisation à la table (T) de travail.

Après avoir assuré le bridage par dépression de la première face (1a) de solidarisation à la table (T) de travail et après avoir effectué le vide dans la réserve tampon (8), on place la pièce (P) à travailler sur la face supérieure (1b) de solidarisation et on désactive l'électrovanne (7), pour la ramener dans la position normalement ouverte à la dépression de la figure 1.

Le fonctionnement de la pompe à vide (3) assure alors la solidarisation par dépression de la pièce (P) à travailler à la face supérieure (1b) de solidarisation du plot de bridage selon l'invention.

Lorsque les vacuostats (6a, 6b) indiquent que le niveau de dépression est satisfaisant, la pompe à vide (3) contenant un clapet anti-retour non représenté en détail peut être arrêtée et la dépression est maintenue grâce à la réserve tampon (8) de vide.

Dans le cas d'une variante de réalisation ne comprenant pas de vacuostat (6a, 6b), l'opération de la pompe à vide (3) peut être interrompue au bout d'un temps prédéterminé correspondant à une dépression suffisante sur les faces inférieure (1a) et supérieure (1b) de solidarisation.

Après avoir assuré le bridage de la pièce (P) à travailler relativement à la table (T) de travail, on effectue l'opération de travail proprement dite : usinage, façonnage ou autre opération de traitement de surface de la pièce (P) à travailler.

Après les opérations de travail sur la pièce (P), la pièce (P) travaillée peut être retirée de la table (T) de travail.

À cet effet, on active le solénoïde de l'électrovanne (7) pour la forcer à communiquer avec la pression atmosphérique. L'entrée d'air par le conduit (9) de mise à la pression atmosphérique permet d'annuler la dépression de bridage sur la face (1b) de solidarisation, ce qui libère la pièce (P) travaillée.

Pendant la libération de la pièce (P) travaillée, la dépression est maintenue du côté de la première face (1a) de solidarisation à la table (T) de travail, du fait que le conduit (2a) est bloqué par l'électrovanne (7), lorsque l'électrovanne (7) est forcée dans sa position d'activation.

L'enlèvement de la pièce (P) travaillée peut ainsi être effectué, pendant que le plot de bridage selon l'invention reste solidarisé par dépression par sa face inférieure (1a) à la table (T) de travail.

Après enlèvement de la pièce (P) travaillée, on désactive l'électrovanne (7) pour lui permettre de revenir dans la position normalement ouverte de la figure 1.

Dans cette position normalement ouverte de la figure 1, l'air entre par la face supérieure (1b) à travers le conduit (2b) et alimente le circuit de dépression pour le mettre à la pression atmosphérique et pour annuler la dépression sur la première face inférieure (1a) de solidarisation.

La mise à la pression atmosphérique de la première face (1a) de solidarisation libère le plot de bridage et permet de le déplacer sur ou en dehors de la table (T) de travail.

Le plot de bridage selon l'invention peut être déplacé manuellement ou de manière automatique par une machine adaptée à cet effet, et l'alimentation en énergie peut éventuellement être rechargée dans un emplacement prévu à cet effet, par branchement sur la prise d'alimentation (4a).

Le dispositif formant plot de bridage selon l'invention peut être réutilisé à volonté selon la même succession d'étapes décrites ci-dessus.

Sur la figure 2, un plot de bridage selon l'invention comporte un couvercle inférieur (10) assemblé au corps (1) du plot de bridage. Le corps (1) du plot de bridage selon l'invention présente une forme cylindrique creuse contenant en partie supérieure un ensemble de plusieurs accumulateurs électriques (4) aptes à être rechargés par une prise (4a).

L'ensemble des accumulateurs électriques (4) est monté sur un plateau (11) supportant un réservoir tampon (8) de dépression. Le plateau (11) est entretoisé avec un autre plateau (12) portant un circuit électronique non représenté en détail et supportant une électrovanne (7) décrite en référence à la figure 1.

Le plateau (12) reçoit un bloc foré (12a) auquel est fixée la pompe à vide (3) sous sa partie inférieure, de manière que la pompe à vide (3) soit suspendue dans le corps (1) à une distance prédéterminée permettant d'éviter toute entrée d'eau lors de l'aspiration de la face inférieure (1a) formant ventouse de solidarisation à la table (T) de travail.

L'assemblage suspendu en partie supérieure du corps (1) peut ainsi être monté ou démonté après enlèvement du couvercle inférieur (10).

La face inférieure (1a) formant ventouse de solidarisation à la table (T) de travail est assujettie au couvercle inférieur (10).

La pompe à vide (3) est, d'une part, avantageusement associée à un premier filtre (5a) associé à la première face inférieure (1a) formant ventouse de solidarisation par dépression.

La pompe à vide (3) est, d'autre part, avantageusement associée à un deuxième filtre (5b) associé à la deuxième face (1b) formant ventouse de solidarisation d'une pièce (P) à travailler.

Un premier vacuostat (6a) est avantageusement prévu pour fournir un signal représentatif de la dépression générée sur la première face (1a) formant ventouse de solidarisation, et un deuxième vacuostat (6b) est avantageusement prévu pour fournir un signal représentatif de la dépression générée sur la deuxième face (1b) formant ventouse de solidarisation.

Un vacuostat (6a) ou (6b) est avantageusement monté sur une colonne (6) présentant deux forages débouchants.

Le distributeur (7) est relié par des conduits non représentés à la deuxième face (1b) formant ventouse de solidarisation par dépression de la pièce (P) à travailler pour permettre la mise en dépression de cette deuxième face (1b) formant ventouse de solidarisation par dépression, ou pour permettre la mise à la pression atmosphérique de cette deuxième face (1b) formant ventouse de solidarisation par dépression.

Le distributeur (7) est constitué en vanne, avantageusement en electrovanne, normalement ouverte dans le sens de la mise en dépression de la deuxième face (1b) formant ventouse de solidarisation de la pièce (P) à travailler, de manière à économiser l'énergie de maintien de la vanne (7) dans cette position prédéterminée de mise en dépression.

Une réserve tampon (8) de vide reliée à la pompe à vide (3) assure la régularité de la pompe à vide (3) et évite des mises en marche et des arrêts répétés de manière rapprochée.

Cette disposition modulaire permet de fabriquer les dispositifs formant plots de bridage selon l'invention dans un encombrement équivalent à l'encombrement des plots de bridage double face de l'art antérieur alimentés par des tuyaux flexibles de vide de l'art antérieur.

Un rideau fluide est disposé en périphérie de la deuxième face (1b) supérieure formant ventouse de solidarisation par dépression, pour constituer un joint capillaire concentrique et éviter le « séchage » et le décollement de la deuxième face (1b) supérieure formant ventouse de solidarisation par dépression, en empêchant en outre la pénétration de poussières, boues, copeaux indésirables ou autres particules.

Le rideau fluide, notamment le rideau liquide, renforce ainsi par capillarité l'étanchéité en face supérieure (1b) de solidarisation par dépression et contribue à économiser l'énergie nécessitée par la mise en dépression et le maintien de la solidarisation par dépression.

L'eau de lubrification d'usinage est avantageusement utilisée pour la formation de la barrière ou rideau fluide, par pompage à l'aide d'une pompe 33 de liquide aspirant l'eau de lubrification d'usinage à travers un filtre 34 extérieur entourant le corps 1.

Un circuit électronique de commande relié par des moyens de communication, de préférence des moyens de communication sans fil, à la machine-outil d'usinage permet la gestion du magasin de plots de bridage double face selon l'invention.

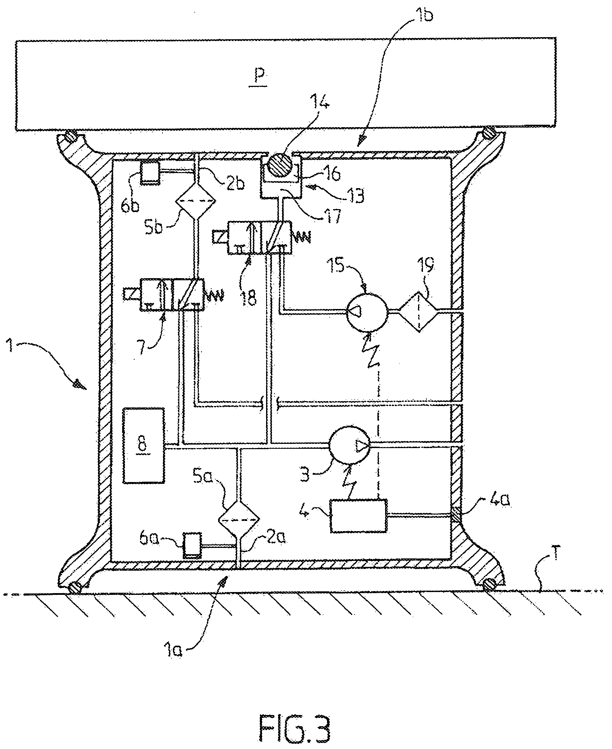

Sur la figure 3, un deuxième mode de réalisation de plot de bridage selon l'invention comporte des éléments identiques ou fonctionnellement équivalents aux éléments décrits en référence à la figure 1.

Ce deuxième mode de réalisation de dispositif selon l'invention comporte en outre un moyen de soulèvement de la pièce (P) à travailler pour en faciliter la translation et le positionnement.

Dans l'exemple représenté, le moyen de soulèvement de la pièce (P) à travailler comporte un vérin (13) à bille porteuse (14).

Le vérin (13) à bille porteuse (14) est de préférence un vérin pneumatique, alimenté par une pompe (15) fournissant une pression d'air comprimé pour assurer le déplacement d'un piston (16) dans une chemise (17).

Un distributeur (18) est monté en communication avec le vérin (13), pour permettre l'alimentation en air comprimé et permettre l'extension du vérin (13), ou pour permettre une communication avec la pompe à vide (3) et permettre le retrait du vérin (13) par aspiration.

Le distributeur (18) est de préférence une électrovanne (18) normalement ouverte, dont la position inactivée est une position de liaison avec la ligne de mise en dépression par la pompe à vide (3).

Un filtre (19) est de préférence prévu entre la communication à l'extérieur du corps (1) avec la pression atmosphérique et la pompe (15).

La pompe (15) est de préférence une pompe électrique alimentée par la source (4) d'alimentation en énergie de la pompe à vide (3).

L'invention couvre également tout autre mode d'alimentation en énergie de la pompe (15), notamment des modes d'alimentation en énergie à distance, par exemple par transmission électromagnétique, par micro-ondes ou par tout autre moyen.

La pompe (15) électrique, reliée dans cet exemple à une alimentation en énergie par batteries électriques, se présente de préférence sous forme d'un ensemble comprenant un moteur électrique et un bloc de compression actionné par ledit moteur électrique.

La pompe (15) électrique est de préférence une pompe à diaphragme excentrique présentant un débit nominal compris entre 1 et 5 litres par minute et apte à atteindre une pression de l'ordre de 1bar par rapport à la pression atmosphérique.

Les bobines ou solénoïdes des électrovannes (7) et (18) sont également de préférence alimentés en énergie par la même source (4) d'alimentation en énergie.

Le fonctionnement du deuxième mode de réalisation du dispositif de bridage selon l'invention est sensiblement identique au fonctionnement décrit en référence à la figure 1, moyennant l'addition d'étapes supplémentaires lors du positionnement de la pièce (P) à travailler sur la face supérieure (1b) de solidarisation par dépression.

Après l'étape de bridage par dépression de la face inférieure (1a) de solidarisation à la table (T) de travail, on met la pompe (15) en activité pour déplacer le piston (16) du vérin (13) vers le haut et sortir la bille porteuse (14) au-dessus du niveau de la face supérieure (1a) de solidarisation. À cet effet, on active l'électrovanne (18) pour faire communiquer la chemise (17) avec la pompe (15) créant la pression pneumatique.

La pièce à travailler (P) est ensuite déplacée par translation sur la bille porteuse (14) pour être positionnée dans la position de référence destinée au travail à effectuer. Lorsque la pièce (P) à travailler est placée en butée ou en position de référence, la pompe (15) créant la pression pneumatique est arrêtée et l'électrovanne (18) est désactivée, de manière à être placée en position normalement ouverte représentée à la figure 3, pour aspirer le piston (16) et le déplacer vers le bas à l'intérieur de la chemise (17), en escamotant ainsi la bille porteuse (14) en dessous du niveau de la deuxième face (1b) de solidarisation de la pièce (P) à travailler.

La réserve de vide (8) alimente la chemise (17) pour assurer le maintien du piston (16) en position basse d'escamotage de la bille (14).

La désactivation de l'électrovanne (7) permet alors la mise en dépression de la face supérieure (1b) de solidarisation de la pièce (P) à travailler, en assurant ainsi le bridage de la pièce (P) à travailler préalablement à l'opération de travail.

La suite des étapes du fonctionnement du deuxième mode de réalisation du dispositif selon l'invention est similaire ou identique aux étapes décrites en référence à la figure 1.

Pour retirer ou déplacer la pièce (P) travaillée, on peut dans certains cas utiliser la bille porteuse (14) au-dessus du niveau de la face supérieure (1a) de solidarisation. Après l'étape de mise à la pression atmosphérique de la face supérieure (1b) de solidarisation, on met la pompe (15) en activité pour déplacer le piston (16) du vérin (13) vers le haut et sortir la bille porteuse (14) au-dessus du niveau de la face supérieure (1a) de solidarisation. À cet effet, on active l'électrovanne (18) pour faire communiquer la chemise (17) avec la pompe (15) créant la pression pneumatique.

La pièce à travailler (P) est ensuite déplacée par translation sur la bille porteuse (14) pour être placée à une position choisie par l'opérateur ou par le programme d'une machine appropriée.

Sur la figure 4, un autre plot de bridage selon l'invention comporte également un couvercle inférieur (10) assemblé au corps (1) du plot de bridage. Le corps (1) du plot de bridage selon l'invention présente une forme cylindrique creuse contenant en partie supérieure un ensemble de plusieurs accumulateurs électriques (4) aptes à être rechargés par une prise (4a).

L'ensemble des accumulateurs électriques (4) est monté sur un plateau (11) supportant un réservoir tampon (8) de dépression. Le plateau (11) est entretoisé avec un autre plateau (12) portant un circuit électronique non représenté en détail et supportant une électrovanne (7).

Le plateau (12) reçoit un bloc foré (12a) auquel est fixée la pompe à vide (3) sous sa partie inférieure, de manière que la pompe à vide (3) soit suspendue dans le corps (1) à une distance prédéterminée permettant d'éviter toute entrée d'eau lors de l'aspiration de la face inférieure (1a) formant ventouse de solidarisation à la table (T) de travail.

L'assemblage suspendu en partie supérieure du corps (1) peut ainsi être monté ou démonté après enlèvement du couvercle inférieur (10).

La face inférieure (1a) formant ventouse de solidarisation à la table (T) de travail est assujettie au couvercle inférieur (10).

La pompe à vide (3) est, d'une part, avantageusement associée à un premier filtre (5a) associé à la première face inférieure (1a) formant ventouse de solidarisation par dépression.

La pompe à vide (3) est, d'autre part, avantageusement associée à un deuxième filtre (5b) associé à la deuxième face (1b) formant ventouse de solidarisation d'une pièce (P) à travailler.

Un premier vacuostat (6a) est avantageusement prévu pour fournir un signal représentatif de la dépression générée sur la première face (1a) formant ventouse de solidarisation, et un deuxième vacuostat (6b) est avantageusement prévu pour fournir un signal représentatif de la dépression générée sur la deuxième face (1b) formant ventouse de solidarisation.

Un vacuostat (6a) ou (6b) est avantageusement monté sur une colonne (6) présentant deux forages débouchants.

Le distributeur (7) est relié par des conduits non représentés à la deuxième face (1b) formant ventouse de solidarisation par dépression de la pièce (P) à travailler pour permettre la mise en dépression de cette deuxième face (1b) formant ventouse de solidarisation par dépression, ou pour permettre la mise à la pression atmosphérique de cette deuxième face (1b) formant ventouse de solidarisation par dépression.

Le distributeur (7) est constitué en vanne, avantageusement en électrovanne, normalement ouverte dans le sens de la mise en dépression de la deuxième face (1b) formant ventouse de solidarisation de la pièce (P) à travailler, de manière à économiser l'énergie de maintien de la vanne (7) dans cette position prédéterminée de mise en dépression.

Une réserve tampon (8) de vide reliée à la pompe à vide (3) assure la régularité de la pompe à vide (3) et évite des mises en marche et des arrêts répétés de manière rapprochée.

Cette disposition modulaire permet de fabriquer les dispositifs formant plots de bridage selon l'invention dans un encombrement équivalent à l'encombrement des plots de bridage double face de l'art antérieur alimentés par des tuyaux flexibles de vide de l'art antérieur.

Un rideau fluide est disposé en périphérie de la deuxième face (1b) supérieure formant ventouse de solidarisation par dépression, pour constituer un joint capillaire concentrique et éviter le « séchage » et le décollement de la deuxième face (1b) supérieure formant ventouse de solidarisation par dépression, en empêchant en outre la pénétration de poussières, boues, copeaux indésirables ou autres particules.

Le rideau fluide, notamment le rideau liquide, renfo0rce ainsi par capillarité l'étanchéité en face supérieure (1b) de solidarisation par dépression et contribue à économiser l'énergie nécessitée par la mise en dépression et le maintien de la solidarisation par dépression.

.L'eau de lubrification d'usinage est avantageusement utilisée pour la formation de la barrière ou rideau fluide, par pompage à l'aide d'une pompe 33 de liquide aspirant l'eau de lubrification d'usinage à travers un filtre 34 extérieur entourant le corps 1 du plot de bridage.

Un circuit électronique de commande relié par des moyens de communication, de préférence des moyens de communication sans fil, à la machine-outil d'usinage permet la gestion du magasin de plots de bridage double face selon l'invention.

Le moyen de soulèvement de la pièce (P) à travailler prévu pour en faciliter la translation et le positionnement comporte un vérin (13) à bille porteuse (14).

Le vérin (13) à bille porteuse (14) est un vérin pneumatique, alimenté par une pompe (15) fournissant une pression d'air comprimé pour assurer le déplacement d'un piston (16) dans une chemise (17).

Un distributeur est monté en communication avec le vérin (13), pour permettre l'alimentation en air comprimé et permettre l'extension du vérin (13), ou pour permettre une communication avec la pompe à vide (3) et permettre le retrait du vérin (13) par aspiration.

Le distributeur (18) est une électrovanne (18) normalement ouverte, dont la position inactivée est une position de liaison avec la ligne de mise en dépression par la pompe à vide (3). Un filtre à air est prévu entre la communication à l'extérieur du corps (1) avec la pression atmosphérique et la pompe (15).

La pompe (15) est une pompe électrique alimentée par la source (4) d'alimentation en énergie de la pompe à vide (3).

Le vérin (13) comportant la chemise (17) est monté solidaire de la réserve (8) de vide, en étant disposé centralement par rapport à l'ensemble des accumulateurs électriques (4) constituant la source d'alimentation électrique du dispositif.

L'embase formée par les plateaux 11 et 12 entretoisés porte la partie inférieure de la réserve (8) et constitue un support de montage de la pompe électrique à vide (3) et de son distributeur associé (7).

La pompe à air (15) et son distributeur associé (18) sont également montés solidaires de l'embase formée par les plateaux 11 et 12 entretoisés, de manière à être suspendus en hauteur à l'intérieur du corps 1.

La colonne (6) présente deux forages en liaison avec les espaces de mise en dépression de la face inférieure (1a) et de la face supérieure (1b) de solidarisation par dépression.

Un ensemble électronique de commande est monté à l'intérieur du corps (1) et comporte une antenne de communication sans fil, de préférence par communication hertzienne, avec une machine de travail non représentée.

Le positionnement des dispositifs de bridage selon l'invention peut ainsi être commandé à distance par le programme contenu dans la machine de travail non représentée.

Une collerette de montage permet l'assemblage par le haut de la réserve de vide (8) et des composants du vérin (13). Le retrait de cette collerette permet ainsi un nettoyage complet des composants du vérin (13) et de la réserve de dépression (8).

L'agencement du deuxième mode de réalisation est similaire à l'agencement du premier mode de réalisation décrit en référence aux figures 1 et 2, et permet une interchangeabilité des composants, notamment des accumulateurs électriques rechargeables (4).

Le dispositif selon l'invention est conçu pour une autonomie en énergie, notamment en énergie électrique, suffisante pour créer une dépression pendant le travail des pièces (P) à travailler, en assurant le bridage inférieur à la table (T) de travail et le bridage supérieur de la pièce (P) à travailler pendant les opérations effectuées par la machine de travail.

La disposition de joints d'étanchéité à la dépression, d'un rideau liquide et de ventouses appropriées permet une économie d'énergie importante en assurant un arrêt de la pompe à vide, et un fonctionnement des pompes uniquement pour compenser les fuites de vide, ou pendant les intervalles de temps correspondant aux positionnements ou à un changement d'étape.

L'utilisation d'un système de transmission sans fil, notamment par radiofréquence, permet d'activer les éléments électriques, notamment les solénoïdes des électrovannes (7) et (18) uniquement pendant les phases de fonctionnement, et permet ainsi d'économiser l'énergie en dehors des phases de fonctionnement, en raison du fait que la position normalement ouverte des vannes (7) et (18) correspond à une position de mise en dépression, sans alimentation électrique de leurs solénoïdes.

L'utilisation d'un vérin (13) à bille porteuse, en particulier d'un vérin (13) pneumatique à bille porteuse (14), permet la sortie de la bille porteuse (14) rapidement et la mise en place de la pièce (P) à usiner en position de référence pour le travail, de manière simple et fiable.

Le retrait du piston (16) par mise en communication avec la source de dépression assure l'escamotage de la bille (14) en dessous du plan de solidarisation de la pièce (P) à travailler et évite ainsi le marquage de la surface inférieure de la pièce (P) à travailler en cours d'usinage par une machine de travail non représentée.

La provision d'un réservoir (8) de vide facilite le bridage de la pièce (P) à travailler, de manière simple et rapide, en évitant des consommations d'énergie par arrêts et marches successifs de la pompe à vide (3), et en économisant ainsi l'énergie d'alimentation.

La recharge des accumulateurs électriques (4) entre deux chargements de pièces (P) à travailler permet la mise à disposition constante et continue d'un ensemble de plots de bridage double face.

L'utilisation des filtres (5a, 5b et 19) assure la protection des conduits de vide et d'air contre les pollutions extérieures engendrées par le travail ou l'usinage de la pièce (P) à travailler.

Un rideau fluide est disposé en périphérie de la face supérieure (1b) de solidarisation par dépression, de manière à empêcher la pénétration de poussières, boues, copeaux indésirables ou autres particules.

Le rideau fluide, notamment le rideau liquide, permet de renforcer par capillarité l'étanchéité en face supérieure (1b) de solidarisation par dépression.

L'eau de lubrification d'usinage peut avantageusement être utilisée pour la formation de la barrière ou rideau fluide, éventuellement par pompage à l'aide d'une pompe additionnelle de liquide.

Le circuit électronique de commande relié par des moyens de communication, de préférence des moyens de communication sans fil, à la machine-outil d'usinage permet également la gestion du magasin de plots de bridage double face selon l'invention.

La machine-outil d'usinage non représentée peut avantageusement comporter un automate programmable ou un micro-ordinateur industriel dédié assurant simultanément la pose et les déplacements des plots de bridage double face selon l'invention.

Dans une version économique de l'invention, les plots de bridage double face peuvent comporter, à l'extérieur du corps (1), des interrupteurs ou des organes de commande « marche/arrêt » permettant le fonctionnement des dispositifs selon l'invention et de leurs organes électriques, tels que les pompes électriques ou les électrovannes pour exécuter les étapes du fonctionnement de manière séquentielle, échelonnée ou simultanée.

Le fonctionnement de la face supérieure de solidarisation par dépression peut être amélioré en prévoyant une collerette ou une jupe concentrique à la ventouse correspondante de la face supérieure de solidarisation par dépression.

Cette collerette ou jupe concentrique additionnelle permet de limiter les durées de fonctionnement des pompes à vide et permet de diminuer leur débit nominal, en économisant ainsi l'énergie requise pour le fonctionnement du dispositif selon l'invention.

Grâce à l'invention, les tuyaux de mise en dépression d'alimentation de l'art antérieur sont entièrement supprimés, et les plots de bridage double face selon l'invention peuvent être posés à n'importe quel emplacement de la table (T) de travail pour supporter de manière optimale une pièce (P) à travailler.

L'invention décrite en référence à deux modes de réalisation particuliers ne leur est nullement limitée, mais couvre au contraire toute modification de forme et toute variante de réalisation dans le cadre des revendications annexées.

## Revendications

1. Dispositif formant plot de bridage, comportant un corps (1) présentant une première face (1a) de solidarisation par dépression à une table (T) de travail et une deuxième face (1b) de solidarisation par dépression d'une pièce (P) à travailler, **caractérisé par le fait que** le corps (1) comporte un moyen générateur de dépression relié à ladite première face (1a) de solidarisation à la table (T),de travail et à ladite deuxième face (1b) de solidarisation d'une pièce (P) à travailler, ledit corps (1) comportant une réserve (8) tampon de vide, apte à être mise en dépression par le moyen générateur de dépression.

2. Dispositif selon la revendication 1, **caractérisé par le fait que** le moyen générateur de dépression comporte une pompe (3) à vide et une source (4) d'alimentation en énergie de ladite pompe (3) à vide.

3. Dispositif selon la revendication 2, **caractérisé par le fait que** la source (4) d'alimentation en énergie de ladite pompe (3) à vide comporte au moins une batterie (4) électrique, de préférence rechargeable.

4. Dispositif selon l'une quelconque des revendications précédentes, **caractérisé par le fait que** le moyen générateur de dépression présente un moyen formant interrupteur d'arrêt et de mise en marche de l'alimentation en énergie.

5. Dispositif selon l'une quelconque des revendications précédentes, **caractérisé par le fait que** le moyen générateur de dépression présente au moins une vanne normalement ouverte (7) de mise en dépression de la deuxième face (1b) de solidarisation de la pièce (P) à travailler, de manière à économiser l'énergie de maintien de la vanne (7) dans une position prédéterminée.

6. Dispositif selon la revendication 5, **caractérisé par le fait que** la vanne (7) normalement ouverte de mise en dépression de ladite deuxième face (1b) de solidarisation par dépression de la pièce (P) à travailler est montée en parallèle sur la ligne de mise en dépression de la première face (1a) de solidarisation à la table (T) de travail.

7. Dispositif selon l'une quelconque des revendications précédentes, **caractérisé par le fait que** le dispositif comporte un moyen (13) de soulèvement de la pièce (P) à travailler, pour en faciliter la translation et le positionnement.

8. Dispositif selon la revendication 1, **caractérisé par le fait que** ledit moyen (13) de soulèvement de la pièce (P) à travailler comporte un vérin (13) de préférence un vérin (13) à bille porteuse (14).

9. Dispositif selon la revendication 1 ou la revendication 8, **caractérisé par le fait que** ledit moyen (13) de soulèvement de la pièce (P) à travailler est commandé par au moins une vanne (18) normalement ouverte de mise en dépression, de manière à économiser l'énergie de maintien de la vanne (18) dans une position prédéterminée.

## Patentansprüche

1. Vorrichtung, die eine Werkstückklemme bildet, umfassend einen Körper (1), der eine erste Verbindungsfläche (1a) durch Unterdruck auf einem Arbeitstisch (T) und eine zweite Verbindungsfläche (1b) durch Unterdruck eines zu bearbeitenden Teils (P) aufweist, **dadurch gekennzeichnet, dass** der Körper (1) ein Unterdruckerzeugungsmittel aufweist, das mit der ersten Verbindungsfläche (1a) auf dem Arbeitstisch (T) und mit der zweiten Verbindungsfläche (1b) eines zu bearbeitenden Teils (P) verbunden ist, wobei der Körper (1) eine Vakuumpufferbehälten (8) aufweist, die imstande ist, von dem Unterdruckerzeugungsmittel in Unterdruck versetzt zu werden.

2. Vorrichtung nach Anspruch 1, **dadurch gekennzeichnet, dass** das Unterdruckerzeugungsmittel eine Vakuumpumpe (3) und eine Energieversorgungsquelle (4) der Vakuumpumpe (3) aufweist.

3. Vorrichtung nach Anspruch 2, **dadurch gekennzeichnet, dass** die Energieversorgungsquelle (4) der Vakuumpumpe (3) mindestens eine vorzugsweise wieder aufladbare elektrische Batterie (4) aufweist.

4. Vorrichtung nach einem der vorangehenden Ansprüche, **dadurch gekennzeichnet, dass** das Unterdruckerzeugungsmittel ein Mittel aufweist, das einen Start- und Stoppschalter der Energieversorgung bildet.

5. Vorrichtung nach einem der vorangehenden Ansprüche, **dadurch gekennzeichnet, dass** das Unterdruckerzeugungsmittel mindestens ein normalerweise geöffnetes Inunterdruckversetzungsventil (7) der zweiten Verbindungsfläche (1 b) des zu bearbeitenden Teils (P) aufweist, um die Halteenergie des Ventils (7) in einer vorbestimmten Position einzusparen.

6. Vorrichtung nach Anspruch 5, **dadurch gekennzeichnet, dass** das normalerweise geöffnete Inunterdruckversetzungsventil (7) der zweiten Verbindungsfläche (1 b) durch Unterdruck des zu bearbeitenden Teils (P) parallel auf der Inunterdruckversetzungslinie der ersten Verbindungsfläche (1a) auf dem Arbeitstisch (T) montiert ist.

7. Vorrichtung nach einem der vorangehenden Ansprüche, **dadurch gekennzeichnet, dass** die Vorrichtung ein Hebemittel (13) des zu bearbeitenden Teils (P) aufweist, um dessen Verschiebung und Positionierung zu erleichtern.

8. Vorrichtung nach Anspruch 1, **dadurch gekennzeichnet, dass** das Hebemittel (13) des zu bearbeitenden Teils (P) einen Zylinder (13), vorzugsweise einen Zylinder (13) mit tragender Kugel (14), aufweist.

9. Vorrichtung nach Anspruch 1 oder Anspruch 8, **dadurch gekennzeichnet, dass** das Hebemittel (13) des zu bearbeitenden Teils (P) von mindestens einem normalerweise geöffneten Inunterdruckversetzungsventil (18) gesteuert ist, um die Halteenergie des Ventils (18) in einer vorbestimmten Position einzusparen.

## Claims

1. A device forming a workpiece clamp, including a body (1) having a first face (1 a) for securing by suctioning to a worktable (T) and a second face (1 b) for securing by suctioning to a part (P) to be worked, **characterized in that** the body (1) includes a suction-generating means connected to said first face (1 a) for securing to the worktable (T) and to said second face (1 b) for securing a part (P) to be worked, said body (1) including a vacuum buffer tank (8), able to be suctioned by the suction-generating means.

2. The device according to claim 1, **characterized in that** the suction-generating means includes a vacuum pump (3) and a power source (4) for said vacuum pump (3).

3. The device according to claim 2, **characterized in that** the power source (4) of said vacuum pump (3) includes at least one electric battery (4), preferably rechargeable.

4. The device according to any one of the preceding claims, **characterized in that** the suction-generating means has a means forming an on/off switch for the power source.

5. The device according to any one of the preceding claims, **characterized in that** the vacuum-generating means has at least one valve that is normally open (7) for suctioning the second face (1 b) for securing the part (P) to be worked, so as to save energy for maintaining the valve (7) in a predetermined position.

6. The device according to claim 5, **characterized in that** the valve (7) that is normally open for suctioning said second face (1 b) for securing by suctioning of the part (P) to be worked is mounted in parallel on the suctioning line of the first face (1 a) for securing to the worktable (T).

7. The device according to any one of the preceding claims, **characterized in that** the device includes a means (13) for lifting the part (P) to be worked, to facilitate the translation and positioning thereof.

8. The device according to claim 1, **characterized in that** said means (13) for lifting the part (P) to be worked includes a jack (13), preferably a jack (13) with bearing balls (14).

9. The device according to claim 1 or claim 8, **characterized in that** said means (13) for lifting the part (P) to be worked is controlled by at least one valve (18) normally open for suctioning, so as to save energy for maintaining the valve (18) in a predetermined position.
